# EUROPEAN PATENT SPECIFICATION

(11) **EP 3 898 293 B1**
(45) Date of publication and mention of the grant of the patent: **04.10.2023**
(21) Application number: 19899368.5
(22) Date of filing: 12.12.2019
(51) Int. Cl.: B60C 23/06, B60C 19/00, B60C 23/04

(54) **TIRE DEFLECTION SENSING SYSTEM**
REIFENDURCHBIEGUNGSSENSORSYSTEM
SYSTÈME DE DÉTECTION DE FLEXION DE PNEU

(30) Priority: 21.12.2018 US 201862783292 P
(43) Date of publication of application: 27.10.2021
(73) Proprietor: Bridgestone Americas Tire Operations, LLC, Nashville, TN 37201 (US)
(72) Inventor: WEI, Terence E., Copley, Ohio 44321 (US); DORFI, Hans, Akron, Ohio 44303 (US); AGARWAL, Amit K., Brentwood, Tennessee 37027 (US); RODGERS, Thomas W., Des Moines, Iowa 50312 (US); SCHEIFELE, Kevin E., Atwater, Ohio 44201 (US)
(74) Representative: Kraus & Weisert Patentanwälte PartGmbB
(86) International application number: PCT/US2019/065835
(87) International publication number: WO 2020/131539

(56) References cited:
- WO-A1-2007/017640
- JP-A- H09 193 627
- US-A- 4 180 794
- US-B2- 10 024 762

## Description

### FIELD OF INVENTION

The present invention relates to a tire sensing system. More particularly, the present invention relates to a system for measuring deflection in a tire as it rolls over a surface.

### BACKGROUND

As a tire rolls over a surface, any given portion of the crown region of the tire will experience deflection as it rolls into and out of contact with the surface. If a tire is inflated to a relatively low pressure, the tire experiences greater deflection and has a greater footprint (*i.e.,* a surface contact area). If a tire is inflated to a relatively high pressure, the tire experiences less deflection and has a smaller footprint. It is known to place sensors inside of a tire cavity to measure pressure and temperature, or to measure tire deflection.

A tire and wheel assembly according to the preamble of claim 1 is known from US 4,180,794 A.

Further tire and wheel assemblies using a deflection sensor are disclosed in US 10,024,762 B2, WO 2007/017640 A1 and JP H09-193627 A.

### SUMMARY OF THE INVENTION

According to the invention, a tire and wheel assembly as defined in claim 1 and a method of regulating pressure in a tire as defined in claim 9 are provided. The dependent claims define preferred and/or advantageous embodiments of the invention.

### BRIEF DESCRIPTION OF DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a schematic drawing of a partial cross-section of one embodiment of a tire and wheel assembly;
**Figures 2A-2C** are exemplary indicia for an inner surface of a tire;
**Figure 3** is an exemplary graph illustrating deflection of a tire;
**Figure 4** is a block diagram illustrating an exemplary system for regulating tire pressure; and
**Figure 5** is a schematic drawing of a partial cross-section of an alternative embodiment of a tire and wheel assembly.

### DETAILED DESCRIPTION

The following includes definitions of selected terms employed herein. The definitions include various examples or forms of components that fall within the scope of a term and that may be used for implementation. The examples are not intended to be limiting. Both singular and plural forms of terms may be within the definitions.

"Axial" or "axially" refer to a direction that is parallel to the axis of rotation of a tire.

"Bead" refers to the part of the tire that contacts the wheel and defines a boundary of the sidewall.

"Circumferential" and "circumferentially" refer to a direction extending along the perimeter of the surface of the tread perpendicular to the axial direction.

"Equatorial plane" refers to the plane that is perpendicular to the tire's axis of rotation and passes through the center of the tire's tread.

"Radial" and "radially" refer to a direction perpendicular to the axis of rotation of a tire.

"Sidewall" refers to that portion of the tire between the tread and the bead.

"Tread" refers to that portion of the tire that comes into contact with the road under normal inflation and load.

Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.

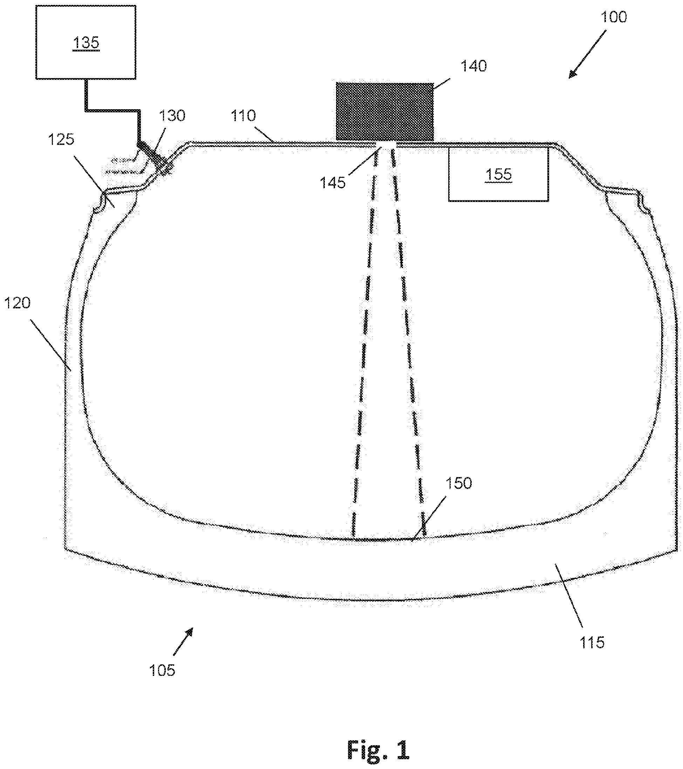

**Figure 1** is a schematic drawing of a partial cross-section of one embodiment of a tire and wheel assembly **100.** Only a lower half of the assembly **100** is shown in this view. The assembly **100** includes a tire **105** mounted on a wheel **110.** The tire **105** includes a tread **115** in a crown region, as well as a pair of sidewalls **120.** The sidewalls **120** terminate in bead regions **125** that are mounted to the wheel **110.** When the tire **105** is mounted on the wheel **110,** the assembly forms an internal cavity.

A valve **130** extends through the wheel **110,** from a location outside the cavity to a location inside the cavity. The valve **130** allows compressed air to be injected into the cavity from an external source. The valve also allows air from inside the cavity to be released into the atmosphere. In the illustrated embodiment, the valve **130** is connected to an air regulator **135.** The air regulator **135** may be connected to the valve **130** as needed to inflate or deflate the tire **105.** Alternatively, the air regulator **135** may remain connected to the valve **130** during operation of the vehicle, thereby allowing the tire **105** to be inflated or deflated during use of the vehicle. In an alternative embodiment, an air regulator is not employed and the tire may instead be manually inflated by an external air source.

A sensor **140** is mounted on the wheel **110** at a location outside the cavity such that no portion of the sensor **140** is inside the cavity. While the sensor **140** is shown as mounted at the center of the wheel **110,** it should be understood that the sensor may be offset from the center of the wheel. Mounting a sensor **140** at a location outside the cavity allows the sensor to be removed or serviced while the tire **105** remains mounted on the wheel **110.** Additionally, by mounting the sensor **140** outside of the cavity, the vehicle may provide power to the sensor through a wired connection or through wireless transmission.

The sensor **140** is mounted over a portal **145** that is spaced away from the valve **130.** In one embodiment, the portal **145** is a through hole, or a pin hole. In such an embodiment, the sensor **140** is exposed to the air inside of the cavity. In an alternative embodiment, the portal **145** is a window made of glass or a polymeric material. In such an embodiment, the sensor **140** is not exposed to the air inside of the cavity.

The sensor **140** includes at least a deflection sensor that monitors an area **150** of an inner wall of the tire **105.** In the illustrated embodiment, the area **150** being monitored is an underside of the tread **115** and is opposite the portal **145.** In an alternative embodiment, the area that is monitored is at a location on the underside of the tread that is not directly opposite the portal. In another alternative embodiment, the area that is monitored is an interior surface of the sidewall of the tire, or a shoulder region of the tire.

The deflection sensor may employ any sensing means. For example, the deflection sensor may be an optical sensor (or a laser sensor) that senses light reflected off the area **150** of the inner wall of the tire **105.** An optical sensor may include a light source, such as a laser, an LED, an incandescent light, or other light source.

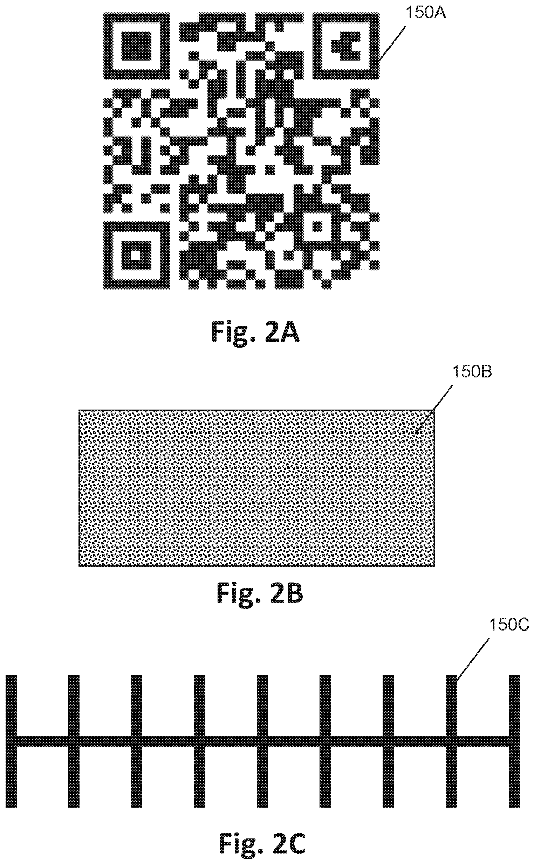

The area **150** of the inner wall of the tire may be marked with indicia to aid in the optical detection of tire deflections. **Figures 2A-2C** illustrate examples of such indicia. In **Figure 2A****,** the area **150A** is marked with a 3D barcode. In **Figure 2B****,** the area **150B** is marked with speckles. In **Figure 2C****,** the area **150C** is marked by a plurality of lines or hash-marks. In each embodiment, the indicia provides an additional visual indicator of changes to the tire surface. These examples are not intended to be limiting, and it should be understood that other types of indicia may be employed. In an alternative embodiment (not shown), protrusions or recesses in the inner surface of the tire may also aid in the optical detection of tire deflections. For example, cords or ridges that protrude from the inner surface of the tire, or dimples or other recesses in the inner surface of the tire may aid in optical detection. In other alternative embodiments, the inner surface of the tire may be smooth and include no markings.

The deflection sensor is not limited to an optical sensor or a laser sensor. In alternative embodiments, the deflection sensor may be, without limitation, an ultrasonic sensor, radar, millimeter wave radar, structured light sensors, a radio frequency sensor, or a magnetic sensor.

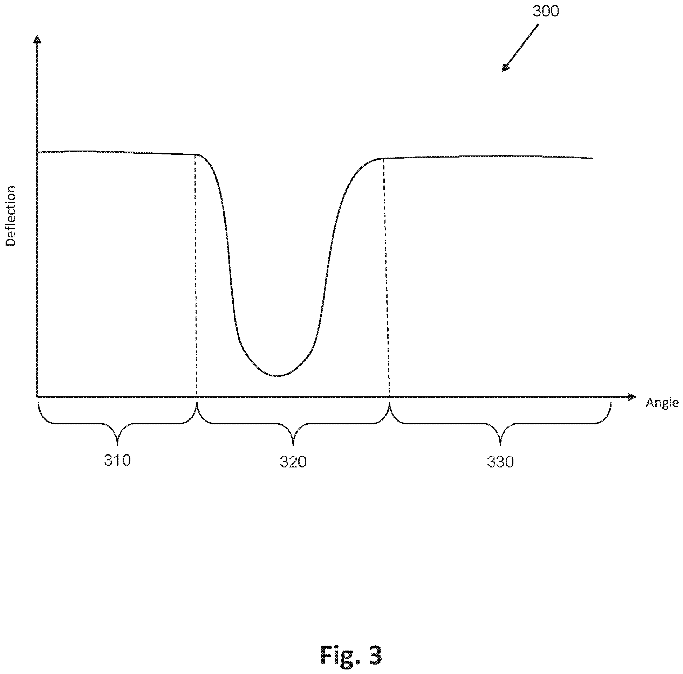

By monitoring the area **150** of the inner wall of the tire **105,** the deflection sensor detects deflections or deformations in that portion of the tire as it rolls into and out of contact with a surface. **Figure 3** is an exemplary graph **300** illustrating the deflection of an area **150** of a tire **105** as a function of the angle as the tire **105** rolls along a surface. As shown in this graph, the monitored area **150** of the tire is spaced from the surface as the tire rotates through a first angle **310,** and thus experiences no deflection. As the tire **105** continues to rotate through a second angle **320,** the monitored area **150** of the tire rolls into contact with the surface and becomes part of the footprint of the tire **105.** Thus, the monitored area **150** of the tire deflects by some amount. If the tire **105** is inflated to a lower level, the tire will deflect more and have a larger footprint than when the tire is inflated to a higher level. The deflections are depicted here as a negative deflection. This depiction is arbitrary, however, and the deflection may be depicted as positive or negative. After the monitored area **150** of the tire rolls out of contact with the surface, the tire **105** continues to rotate through a third angle **330.** Once again, the monitored portion experiences no deflection as it rotates through the third angle **330.**

On some vehicles, it may be desirable for tires to have different footprints for different applications. For example, in an agricultural vehicle, it may be desirable for a tire to have a large footprint and greater deflection when the vehicle is traveling over a field to avoid damaging crops or damaging the tires. It may be further desirable for a tire on an agricultural vehicle to have a small footprint and less deflection when the vehicle is traveling over a road at a higher speed. Likewise, in other vehicles such as off road vehicles, trucks, and passenger cars, it may be desirable to adjust the footprint of a tire as the vehicle travels on different surfaces or at different speeds.

Returning to **Figure 1****,** the sensor **140** may further include a position sensor or an accelerometer to provide data for determining the position of the sensor **140** and the monitored area **150.** The position sensor may be an encoder. The accelerometer may provide acceleration data that a computer processor can analyze to determine an angular position of the sensor **140.** The sensor **140** may also include both an accelerometer and a position sensor. In an alternative embodiment, an accelerometer or position sensor is disposed on the wheel **110** or tire **105** separately from the sensor **140.** In an alternative embodiment, an orientation sensor may be employed instead of a position sensor. In one such embodiment, the orientation sensor would detect when the sensor is pointed down at the ground (and therefore the center of the footprint) to trigger the deflection sensor to make a measurement.

The sensor **140** may also include a temperature and pressure sensor. While the deflections of a tire are correlated to the internal temperature and pressure of a tire, other factors may affect the amount of deflection that occurs. Thus, the data obtained from a temperature and pressure sensor can be used to confirm the monitored deflections and also identify other issues with the tire. In embodiments in which the portal **145** is a through hole, a temperature and pressure sensor in the sensor **140** may be able to obtain meaningful data while mounted entirely outside of the cavity. If the portal **145** is a window, or if it is otherwise desirable to monitor the temperature and pressure from a sensor located inside the cavity, a second sensor **155** may be employed. In the illustrated embodiment, the second sensor **155** is mounted to the wheel **110.** In an alternative embodiment (not shown), the second sensor is mounted to an inner surface of the tire. In another alternative embodiment, the second sensor may be omitted. In another alternative embodiment, the sensor includes a separate temperature sensor. In yet another alternative embodiment, the sensor includes a separate pressure sensor.

The sensor **140** may also include a humidity sensor. The humidity inside of the cavity may affect the pressure, and thus may affect the amount of deflection that occurs. The data obtained from a humidity sensor can therefore be used to confirm the monitored deflections and also identify other issues with the tire. In embodiments in which the portal **145** is a through hole, a humidity sensor in the sensor **140** may be able to obtain meaningful data while mounted entirely outside of the cavity. If the portal **145** is a window, or if it is otherwise desirable to monitor the humidity from a sensor located inside the cavity, the humidity sensor may be employed in the second sensor **155.** In an alternative embodiment (not shown), the humidity sensor may be a third sensor mounted internally in the cavity. In another alternative embodiment, the humidity sensor may be omitted.

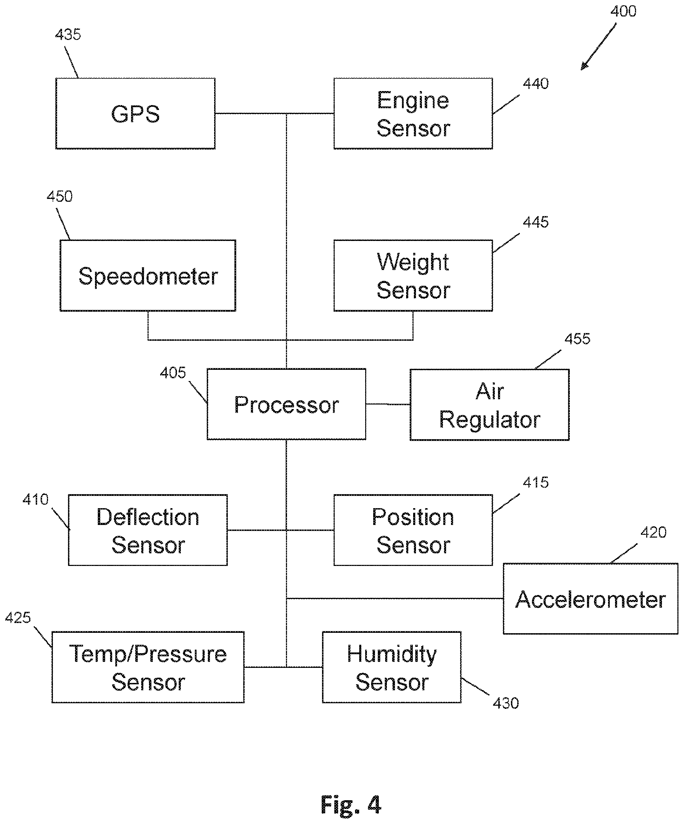

The sensors described above may be integrated into a system for monitoring a tire. Additionally, the sensors described above may be employed in a system for regulating air pressure in a tire. **Figure 4** is a block diagram illustrating an exemplary system **400** for regulating tire pressure. It should be understood that the blocks represent system components that may be housed together in a common housing or in multiple separate housings. It should be further understood that additional components may be employed, including multiples of the same component for redundancy purposes. For example, while a single processor **405** is illustrated, any of the illustrated components may include an associated processor.

Each of the other components is shown as being in signal communication with the processor **405.** The communication may be through wires or other physical media, or it may be through wireless communication means, such as through radio frequency (RF) transmissions. The communications may also be a combination of wired and wireless communication. Additionally, certain components may be in signal communication with each other in a manner not illustrated here.

The processor **405** is in communication with a deflection sensor **410,** such as one of the deflection sensors described above. The deflection sensor **410** transmits data related to the deflection of the monitored area of the tire to the processor **405.** Additionally, a position sensor **415** transmits data related to the position of the deflection sensor **410** to the processor **405.** An accelerometer **420** may also transmit data related to the acceleration of the deflection sensor **410.** Based on the data from the deflection sensor **410,** the position sensor **415,** and the accelerometer **420,** the processor calculates the deflection of the tire as rolls over a surface. In an alternative embodiment, the processor **405** may calculate the deflection of the tire with fewer inputs than are shown. In another alternative embodiment, an orientation sensor may be employed instead of a position sensor.

The processor **405** also is in signal communication with a temperature and pressure sensor **425.** The temperature and pressure sensor **425** transmits data related to the temperature and pressure inside of the cavity of the tire. While the sensor **425** is identified as a single sensor that detects both temperature and pressure, it should be understood that a first sensor may be detect temperature while a second sensor detects pressure. The first and second sensor may be disposed in the same housing or in different housings.

The processor **405** is also in signal communication with a humidity sensor **430.** The humidity sensor **430** transmits data related to the humidity inside of the cavity of the tire. The processor may incorporate the temperature, pressure, or humidity data when determining the deflection of the tire.

The data transmitted by the deflection sensor **410,** the position sensor **415,** the accelerometer **420,** the temperature and pressure sensor **425,** and the humidity sensor **430** may be referred to collectively as sensors that collect tire-related data, or tire data, because the data are related to and extracted from a tire. Additional tire sensors may be employed to monitor and transmit other tire-related data, such as tire identification, strain, wear, and other properties.

With continued reference to **Figure 4****,** the processor **405** is also in signal communication with sensors that collect non-tire-related data, or non-tire data. For example, the processor **405** is in signal communication with a Global Positioning System (GPS) **435.** The GPS **435** calculates a geographic position based on satellite transmissions. The GPS **435** or the processor **405** may determine the terrain that a vehicle is traveling over by correlating GPS data with terrain data stored in a database or other memory (not shown). For example, the GPS **435** or the processor **405** may determine that the vehicle is traveling across a field or traveling on a highway.

The processor **405** is also in signal communication with an engine sensor **440** that monitors an engine, such as by monitoring engine strain. Engine strain data may be used by the processor **405** to calculate a load on the vehicle.

Additionally, the processor **405** is in signal communication with a weight sensor **445.** The weight sensor may directly sense weight in a vehicle, a portion of the vehicle, or in a trailer connected to the vehicle.

The processor **405** is also in signal communication with a speedometer **450** that measures the speed of the vehicle. The processor may also be in signal communication with other sensors, such as a vehicle accelerometer or a suspension sensor. Such sensors may provide data to the processor that indicates whether the vehicle is traveling over smooth or bumpy terrain. Additionally, the processor may receive input from a user, such as an indication of terrain or environmental conditions.

Based at least in part on the non-tire data, the processor **405** determines a desired tire deflection. For example, the processor **405** may determine a desired tire deflection based on one or more of the vehicle speed, vehicle acceleration, terrain data, vehicle load, and engine strain. The determination may be based on an algorithm, machine learning, or by referring to lookup tables. The lookup tables may be populated manually based on test results, or through machine learning. For example, based on the non-tire data, the processor **405** may determine that the vehicle is carrying heavy equipment on a dirt road at medium speed. In such conditions, a medium level of deflection may be desired. As another example, the processor 405 may determine that the vehicle is not carrying a load and is traveling across a field at low speed. In such conditions, a high level of deflection may be desired. As yet another example, the processor **405** may determine that the vehicle is not carrying a load, and is travelling over a road at high speeds. In such conditions, a low level of deflection may be desired.

Based on additional data, such as the temperature, pressure, or humidity inside the tire cavity, the processor calculates a pressure that corresponds to the desired tire deflection. In the illustrated embodiment, the processor **405** is in signal communication with an air regulator **455.** The processor **405** transmits signals to the air regulator **455** to inflate or deflate the tire, and thus adjust the air pressure inside the tire until the observed tire deflection is within a predetermined amount of the desired tire deflection. In other words, the pressure adjustment may be based in part on at least one of the measured temperature, the measured pressure, or the measured humidity.

In an alternative embodiment (not shown) the processor displays inflation status and recommendations to a user. Thus, when an air regulator is not employed, the user may manually inflate or deflate the tire to achieve the desired tire deflection. In all embodiments, the data may be displayed to a user or stored. The data may be employed in an iterative process to refine the desired tire deflection for certain conditions.

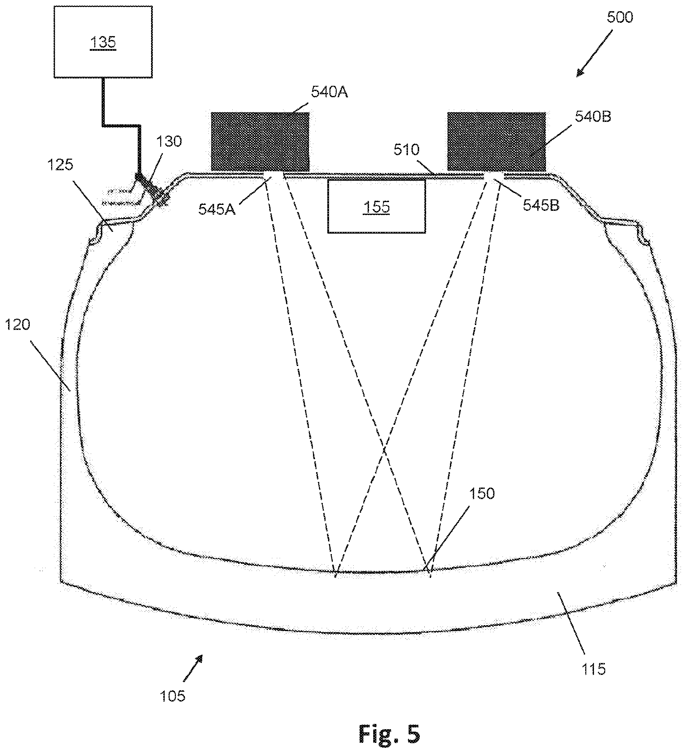

**Figure 5** is a schematic drawing of a partial cross-section of an alternative embodiment of a tire and wheel assembly **500.** The assembly **500** is substantially the same as the assembly **100** described above with respect to **Figure 1****,** except for the differences discussed herein. Like reference numerals are used for like elements.

In the illustrated embodiment, the tire **105** is mounted on a modified wheel **510.** Instead of a single external sensor, a first external sensor **540A** is mounted on the wheel **510** over a first portal **545A** and a second external sensor **540B** is mounted on the wheel **510** over a second portal **545B.** Each of the first and second sensors **540A,B** may be the same as the external sensor **140** described above. In one embodiment, the first sensor **540A** is the same type of sensor as the second sensor **540B.** In an alternative embodiment, the first sensor **540A** is a different type of sensor than the second sensor **540B.** For example, one of the external sensors may be an optical sensor while the other sensor is a radio frequency sensor.

In the illustrated embodiment, the first and second external sensor **540A,B** monitor the same area **150** of the tire **105,** with each sensor **540A,B** monitoring the area **150** at a different angle. By monitoring the same area 150 at different angles, the deflection of the area may be measured more accurately. In an alternative embodiment (not shown), each of the external sensors monitors a different area of the tire.

In each of the embodiments described above, the components described may be dedicated for use with a single tire. However, some of the components may be used for multiple tires. For example, a single processor may be in signal communication with sensors from multiple tires. Additionally, a single air compressor can connected to multiple tires.

While it may be desirable to employ sensors on every tire of a vehicle, it may be acceptable to only monitor a single tire on each axle, and regulate the pressure of all of the tires on that axle based on the monitoring of the single tire. In some instances, it may be acceptable to only monitor a single tire on the vehicle, and regulate the pressure of all of the tires on the vehicle based on the monitoring of the single tire.

## Claims

1. A tire and wheel assembly (100; 500) comprising:
a wheel (110; 510) having a through hole (145; 545A, 454B);
a tire (105) mounted on the wheel (110; 510), thereby forming a cavity;
a valve (130) extending through the wheel (110; 510), from a location outside the cavity to a location inside the cavity, wherein the valve (130) is spaced away from the through hole (145; 545A, 454B); and
a deflection sensor (140; 410; 540A, 540B) mounted on the wheel(110; 510),
**characterized in that**
the deflection sensor (140; 410; 540A, 540B) is mounted on the wheel (110; 510) over the through hole (145; 545A, 454B) at a location outside the cavity such that no portion of the deflection sensor (140; 410; 540A, 540B) is inside the cavity.

2. The tire and wheel assembly (100; 500) of claim 1, further comprising a temperature and pressure sensor (140; 425; 540A, 540B).

3. The tire and wheel assembly (100; 500) of claim 1 or claim 2, further comprising an accelerometer (140; 420; 540A, 540B).

4. The tire and wheel assembly (100; 500) of any one of claims 1 to 3, wherein the deflection sensor (140; 410; 540A, 540B) includes one of a position sensor (140; 415; 540A, 540B) and an orientation sensor (140; 540A, 540B).

5. The tire and wheel assembly (100; 500) of any one of claims 1 to 4, wherein the tire (105) includes indicia (150A; 150B; 150C) on an inner surface of the tire (105) at a location (150) opposite the deflection sensor (140; 410; 540A, 540B).

6. The tire and wheel assembly (100; 500) of any one of claims 1 to 5, further comprising a processor (405) in signal communication with the deflection sensor (140; 410; 540A, 540B).

7. The tire and wheel assembly (100; 500) of claim 6, further comprising an air regulator (135; 455) connected to the valve (130) and in signal communication with the processor (405).

8. The tire and wheel assembly (100; 500) of any one of claims 1 to 7, wherein the deflection sensor (140; 410; 540A, 540B) is a sensor selected from the group consisting of an optical sensor, an ultrasonic sensor, a radio frequency sensor, a magnetic sensor, a radar, a millimeter wave radar, a structured light sensor and a laser sensor.

9. A method of regulating pressure in a tire (105), the method comprising:
providing a tire (105) mounted on a wheel (110; 510) of a vehicle,
wherein the tire (105) and wheel (110; 510) define a cavity, and
wherein the wheel (110; 510) has a through hole (145; 545A, 454B) disposed therein;
providing a deflection sensor (140; 410; 540A, 540B) on the wheel (110; 510) over the through hole (145; 545A, 454B), at a location outside the cavity such that no portion of the deflection sensor (140; 410; 540A, 540B) is inside the cavity;
monitoring, with the deflection sensor (140; 410; 540A, 540B), a selected area (150) of an inner wall of the tire (105) opposite the through hole (145; 545A, 454B);
calculating a tire deflection based on the monitoring of the selected area (150) of the inner wall of the tire (105) opposite the through hole (145; 545A, 454B);
determining a desired tire deflection of the tire (105) based at least in part on non-tire data; and
adjusting air pressure inside the tire (105) until the calculated tire deflection is within a predetermined amount of the desired tire deflection.

10. The method of claim 9, wherein the non-tire data is selected from the group consisting of vehicle speed, vehicle acceleration, terrain data, vehicle load, and engine strain.

11. The method of claim 9 or claim 10, further comprising monitoring one of a position and an orientation of the deflection sensor (140; 410; 540A, 540B).

12. The method of any one of claims 9 to 11, further comprising monitoring a humidity level inside the tire (105).

13. The method of claim 12, wherein the step of adjusting the air pressure inside the tire (105) is based in part on the humidity level inside the tire (105).

14. The method of any one of claims 9 to 13, further comprising monitoring a temperature inside the tire (105).

15. The method of claim 14, wherein the step of adjusting the air pressure inside the tire (105) is based in part on the temperature inside the tire (105).

## Patentansprüche

1. Reifen- und Radanordnung (100, 500), umfassend:
ein Rad (110; 510), das ein Durchgangsloch (145; 545A, 454B) aufweist;
einen Reifen (105), der an dem Rad (110; 510) montiert ist, wodurch ein Hohlraum gebildet wird;
ein Ventil (130), das sich durch das Rad (110; 510) von einer Stelle außerhalb des Hohlraums zu einer Stelle innerhalb des Hohlraums erstreckt, wobei das Ventil (130) von dem Durchgangsloch (145; 545A, 454B) weg beabstandet ist; und
einen Ablenksensor (140; 410; 540A, 540B), der an dem Rad (110; 510) montiert ist,
**dadurch gekennzeichnet, dass**
der Ablenksensor (140; 410; 540A, 540B) an dem Rad (110; 510) über dem Durchgangsloch (145; 545A, 454B) an einer Stelle außerhalb des Hohlraums derart montiert ist, dass kein Abschnitt des Ablenksensors (140; 410; 540A, 540B) innerhalb des Hohlraums ist.

2. Reifen- und Radanordnung (100; 500) nach Anspruch 1, ferner umfassend einen Temperatur- und Drucksensor (140; 425; 540A, 540B).

3. Reifen- und Radanordnung (100; 500) nach Anspruch 1 oder 2, ferner umfassend einen Beschleunigungsmesser (140; 420; 540A, 540B).

4. Reifen- und Radanordnung (100; 500) nach einem der Ansprüche 1 bis 3, wobei der Ablenksensor (140; 410; 540A, 540B) eines von einem Positionssensor (140; 415; 540A, 540B) und einem Ausrichtungssensor (140; 540A, 540B) einschließt.

5. Reifen- und Radanordnung (100; 500) nach einem der Ansprüche 1 bis 4, wobei der Reifen (105) Zeichen (150A; 150B; 150C) auf einer Innenoberfläche des Reifens (105) an einer Stelle (150) gegenüber dem Ablenksensor (140; 410; 540A, 540B) einschließt.

6. Reifen- und Radanordnung (100; 500) nach einem der Ansprüche 1 bis 5, ferner umfassend einen Prozessor (405) in Signalkommunikation mit dem Ablenksensor (140; 410; 540A, 540B).

7. Reifen- und Radanordnung (100; 500) nach Anspruch 6, ferner umfassend einen Luftregler (135; 455), der mit dem Ventil (130) verbunden ist und in Signalkommunikation mit dem Prozessor (405).

8. Reifen- und Radanordnung (100; 500) nach einem der Ansprüche 1 bis 7, wobei der Ablenksensor (140; 410; 540A, 540B) ein Sensor ist, der aus der Gruppe ausgewählt ist, bestehend aus: einem optischen Sensor, einem Ultraschallsensor, einem Hochfrequenzsensor, einem Magnetsensor, einem Radar, einem Millimeterwellenradar, einem strukturierten Lichtsensor und einem Lasersensor.

9. Verfahren zum Regulieren von Druck in einem Reifen (105), das Verfahren umfassend:
Bereitstellen eines Reifens (105), der an einem Rad (110; 510) eines Fahrzeugs montiert ist,
wobei der Reifen (105) und das Rad (110; 510) einen Hohlraum definieren, und
wobei das Rad (110; 510) ein Durchgangsloch (145; 545A, 454B) aufweist, das darin eingerichtet ist;
Bereitstellen eines Ablenksensors (140; 410; 540A, 540B) am dem Rad (110; 510) über dem Durchgangsloch (145; 545A, 454B) an einer Stelle außerhalb des Hohlraums, derart, dass kein Abschnitt des Ablenksensors (140; 410; 540A, 540B) innerhalb des Hohlraums ist;
Überwachen, mit dem Ablenksensor (140; 410; 540A, 540B), eines ausgewählten Bereichs (150) einer Innenwand des Reifens (105) gegenüber dem Durchgangsloch (145; 545A, 454B);
Berechnen einer Reifenablenkung basierend auf dem Überwachen des ausgewählten Bereichs (150) der Innenwand des Reifens (105) gegenüber dem Durchgangsloch (145; 545A, 454B);
Bestimmen einer gewünschten Reifenablenkung des Reifens (105) mindestens teilweise basierend auf Nichtreifendaten; und
Einstellen des Luftdrucks innerhalb des Reifens (105), bis die berechnete Reifenablenkung innerhalb eines vorbestimmten Betrags der gewünschten Reifenablenkung liegt.

10. Verfahren nach Anspruch 9, wobei die Nichtreifendaten aus der Gruppe ausgewählt sind, bestehend aus: Fahrzeuggeschwindigkeit, Fahrzeugbeschleunigung, Geländedaten, Fahrzeuglast und Motorbelastung.

11. Verfahren nach Anspruch 9 oder 10, ferner umfassend das Überwachen eines von einer Position und einer Ausrichtung des Ablenksensors (140; 410; 540A, 540B).

12. Verfahren nach einem der Ansprüche 9 bis 11, ferner umfassend das Überwachen eines Feuchtigkeitsniveaus innerhalb des Reifens (105).

13. Verfahren nach Anspruch 12, wobei der Schritt des Einstellens des Luftdrucks innerhalb des Reifens (105) teilweise auf dem Feuchtigkeitsniveau innerhalb des Reifens (105) basiert.

14. Verfahren nach einem der Ansprüche 9 bis 13, ferner umfassend das Überwachen einer Temperatur innerhalb des Reifens (105).

15. Verfahren nach Anspruch 14, wobei der Schritt des Einstellens des Luftdrucks innerhalb des Reifens (105) teilweise auf der Temperatur innerhalb des Reifens (105) basiert.

## Revendications

1. Ensemble roue et pneu (100 ; 500) comprenant :
une roue (110 ; 510) ayant un trou traversant (145 ; 545A, 454B) ;
un pneu (105) monté sur la roue (110 ; 510), formant ainsi une cavité ;
une valve (130) s'étendant à travers la roue (110 ; 510), à partir d'un emplacement à l'extérieur de la cavité jusqu'à un emplacement à l'intérieur de la cavité, dans lequel la valve (130) est espacée du trou traversant (145 ; 545A, 454B) ; et
un capteur de déflexion (140 ; 410 ; 540A, 540B) monté sur la roue (110 ; 510),
**caractérisé en ce que**
le capteur de déflexion (140 ; 410 ; 540A, 540B) est monté sur la roue (110 ; 510) sur le trou traversant (145 ; 545A, 454B) à un emplacement à l'extérieur de la cavité de sorte qu'aucune partie du capteur de déflexion (140 ; 410 ; 540A, 540B) n'est à l'intérieur de la cavité.

2. Ensemble roue et pneu (100 ; 500) selon la revendication 1, comprenant en outre un capteur de température et de pression (140 ; 425 ; 540A, 540B).

3. Ensemble roue et pneu (100 ; 500) selon la revendication 1 ou la revendication 2, comprenant en outre un accéléromètre (140 ; 420 ; 540A, 540B).

4. Ensemble roue et pneu (100 ; 500) selon l'une quelconque des revendications 1 à 3, dans lequel le capteur de déflexion (140 ; 410 ; 540A, 540B) comporte un parmi un capteur de position (140 ; 415 ; 540A, 540B) et un capteur d'orientation (140 ; 540A, 540B).

5. Ensemble roue et pneu (100 ; 500) selon l'une quelconque des revendications 1 à 4, dans lequel le pneu (105) comporte des marques (150A ; 150B ; 150C) sur une surface interne du pneu (105) sur un emplacement (150) opposé au capteur de déflexion (140 ; 410 ; 540A, 540B).

6. Ensemble roue et pneu (100 ; 500) selon l'une quelconque des revendications 1 à 5, comprenant en outre un processeur (405) en communication de signal avec le capteur de déflexion (140 ; 410 ; 540A, 540B).

7. Ensemble roue et pneu (100 ; 500) selon la revendication 6, comprenant en outre un régulateur d'air (135 ; 455) connecté à la valve (130) et en communication de signal avec le processeur (405).

8. Ensemble roue et pneu (100 ; 500) selon l'une quelconque des revendications 1 à 7, dans lequel le capteur de déflexion (140 ; 410 ; 540A, 540B) est un capteur sélectionné parmi le groupe constitué de : un capteur optique, un capteur à ultrasons, un capteur radiofréquence, un capteur magnétique, un radar, un radar à ondes millimétriques, un capteur de lumière structurée et un capteur laser.

9. Procédé de régulation de la pression dans un pneu (105), le procédé comprenant :
la fourniture d'un pneu (105) monté sur une roue (110 ; 510) d'un véhicule,
dans lequel le pneu (105) et la roue (110 ; 510) définissent une cavité, et
dans lequel la roue (110 ; 510) a un trou traversant (145 ; 545A, 454B) disposé en son sein ;
la fourniture d'un capteur de déflexion (140 ; 410 ; 540A, 540B) sur la roue (110 ; 510) sur le trou traversant (145 ; 545A, 454B), sur un emplacement à l'extérieur de la cavité de sorte qu'aucune partie du capteur de déflexion (140 ; 410 ; 540A, 540B) est à l'intérieur de la cavité ;
la surveillance, avec le capteur de déflexion (140 ; 410 ; 540A, 540B), d'une zone sélectionnée (150) d'une paroi interne du pneu (105) opposée au trou traversant (145 ; 545A, 454B) ;
le calcul d'une déflexion de pneu sur la base de la surveillance de la zone sélectionnée (150) de la paroi interne du pneu (105) opposée au trou traversant (145 ; 545A, 454B) ;
la détermination d'une déflexion de pneu souhaitée du pneu (105) sur la base au moins en partie de données ne concernant pas le pneu ; et
le réglage de la pression d'air à l'intérieur du pneu (105) jusqu'à ce que la déflexion calculée du pneu soit dans une quantité prédéterminée de la déflexion souhaitée du pneu.

10. Procédé selon la revendication 9, dans lequel les données ne concernant pas le pneu sont sélectionnées parmi le groupe constitué de : une vitesse du véhicule, une accélération du véhicule, des données de terrain, une charge du véhicule et une contrainte du moteur.

11. Procédé selon la revendication 9 ou la revendication 10, comprenant en outre la surveillance d'une parmi une position et une orientation du capteur de déflexion (140 ; 410 ; 540A, 540B).

12. Procédé selon l'une quelconque des revendications 9 à 11, comprenant en outre la surveillance d'un taux d'humidité à l'intérieur du pneu (105).

13. Procédé selon la revendication 12, dans lequel l'étape de réglage de la pression d'air à l'intérieur du pneu (105) est basée en partie sur le taux d'humidité à l'intérieur du pneu (105).

14. Procédé selon l'une quelconque des revendications 9 à 13, comprenant en outre la surveillance d'une température à l'intérieur du pneu (105).

15. Procédé selon la revendication 14, dans lequel l'étape de réglage de la pression d'air à l'intérieur du pneu (105) est basée en partie sur la température à l'intérieur du pneu (105).
